# NEUE EUROPÄISCHE PATENTSCHRIFT

(11) **EP 4 168 368 B2**
(45) Veröffentlichungstag und Bekanntmachung des Hinweises auf die Entscheidung über den Einspruch: **08.07.2026**
(45) Hinweis auf die Patenterteilung: 13.09.2023
(21) Anmeldenummer: 22730425.0
(22) Anmeldetag: 23.05.2022
(51) Int. Cl.: C04B 7/47

(54) **VERFAHREN UND VORRICHTUNG ZUR HERSTELLUNG VON ZEMENTKLINKER**
METHOD AND DEVICE FOR PRODUCING CEMENT CLINKER
PROCÉDÉ ET DISPOSITIF DE PRODUCTION DE CLINKER DE CIMENT

(30) Priorität: 25.05.2021 DE 102021205298; 25.05.2021 BE 202105418
(43) Veröffentlichungstag der Anmeldung: 26.04.2023
(73) Patentinhaber: thyssenkrupp Polysius GmbH, 59269 Beckum (DE); thyssenkrupp AG, 45143 Essen (DE)
(72) Erfinder: WILLMS, Eike, 44309 Dortmund (DE); KIMMIG, Constantin, 59494 Soest (DE)
(74) Vertreter: Tetzner, Michael
(86) Internationale Anmeldenummer: PCT/EP2022/063848
(87) Internationale Veröffentlichungsnummer: WO 2022/248384

(56) Entgegenhaltungen:
- DE-A1- 19 844 038
- VEREIN DEUTSCHER ZEMENTWERKE E.V.: "Tätigkeitsbericht / Activity Report 2012-2015", VDZ., 1 January 2015 (2015-01-01), XP093193222
- "CO2 capture from cement production (D6.1 revision 1 Optimised operation of an oxyfuel cement plant)", CEMCAP; GRANT AGREEMENT NUMBER: 641185; TYPE OF ACTION: H2020-LCE-2014-2015/H2020-LCE-2014-1, 11 April 2018 (2018-04-11), XP093193228
- "CO2 capture from cement production (D8.3 Assessment of calciner test results Revision 1)", CEMCAP; GRANT AGREEMENT NUMBER: 641185; TYPE OF ACTION: H2020-LCE-2014-2015/H2020-LCE-2014-1, 31 March 2018 (2018-03-31), XP093193231
- "CO2 capture from cement production (D9.2 Analysis of oxyfuel clinker cooler operational performance)", CEMCAP; GRANT AGREEMENT NUMBER: 641185; TYPE OF ACTION: H2020-LCE-2014-2015/H2020-LCE-2014-1, 2 March 2018 (2018-03-02), XP093193236
- Schriftenreihe der Zementindustrie Heft 79/2013: „CO2-Emissionsminderungspotential und technologische Auswirkungen der Oxyfuel-Technologie im Zementklinkerbrennprozess“, Kristina Koring
- European Cement Research Academy, ECRA, Ed. ECRA CCS Project: Report on Phase IV.A, Duesseldorf, 2016 (Technical report TR-ECRA-128/2016)
- Sebastian Oberhauser: Bewertung und Vergleich von Konzepten der CO2-armen Ze-mentklinkerherstellung auf Basis von CCS Technologien, Cuvillier Verlag Göttingen 2020; ISBN 978-7369-7241-4

## Beschreibung

Die Erfindung betrifft ein Verfahren zur Herstellung von Zementklinker.

Aus dem Stand der Technik ist es bekannt, sauerstoffhaltiges Gas zur Verbrennung von Brennstoff in den Drehrohrofen oder den Kalzinator einer Zementherstellungsanlage einzuführen. Zur Reduzierung der Abgasmenge und um auf aufwändige Reinigungsverfahren verzichten zu können, ist es beispielsweise aus der DE 10 2018 206 673 A1 bekannt, ein möglichst sauerstoffreiches Verbrennungsgas zu verwenden, sodass der CO2-Gehalt in dem Abgas hoch ist. Die DE 10 2018 206 673 A1 offenbart das Einleiten eines sauerstoffreichen Gases in den Kühlereinlassbereich zur Vorwärmung des Gases und Kühlung des Klinkers.

Aus der DE 198 44 038 A1 ist ein Verfahren zum Herstellen von weißem Zement bekannt.

Bei einer solchen Betriebsweise kommt es beispielswiese zu sehr hohen Temperaturen innerhalb des Kalzinators und zu einer hohen Feststoffbeladung des Gases, beispielsweise im Kalzinator. Dies führt zu Materialansätzen in dem Kalzinator und somit schlimmstenfalls zu einem Verstopfen und einer Beschädigung der Kalzinatorinnenwand.

Davon ausgehend ist es Aufgabe der vorliegenden Erfindung ein Verfahren zur Herstellung von Zementklinker bereitzustellen, welche die oben genannten Nachteile überwindet und gleichzeitig eine Abscheidung von CO₂ aus dem Abgas auf einfache Weise ermöglicht.

Diese Aufgabe wird erfindungsgemäß durch ein Verfahren mit den Merkmalen des unabhängigen Verfahrensanspruchs 1 gelöst. Vorteilhafte Weiterbildungen ergeben sich aus den abhängigen Ansprüchen.

Ein Verfahren zum Herstellen von Zementklinker umfasst nach einem ersten Aspekt die Schritte:
Vorwärmen von Rohmehl in einem Vorwärmer,
Kalzinieren des vorgewärmten Rohmehls in einem Kalzinator,
Brennen des vorgewärmten und vorkalzinierten Rohmehls in einem Ofen zu Zementklinker, wobei dem Ofen ein Verbrennungsgas mit einem Sauerstoffanteil von mehr als 50 Vol.-%, insbesondere mehr als 80 Vol.-%, Vorzugsweise mehr als 95 Vol.-% zugeführt wird, und
Kühlen des Zementklinkers in einem Kühler, wobei der Kühler in Förderrichtung des Zementklinkers einen ersten Kühlerbereich und einen zweiten Kühlerbereich aufweist und wobei die Abluft des ersten Kühlerbereichs das dem Ofen zugeführte Verbrennungsgas bildet.

Das Abgas des zweiten Kühlerbereichs wird dem Kalzinator zugeführt und weist einen Sauerstoffanteil von maximal 15 Vol.-%, insbesondere maximal 10 Vol.-%, vorzugsweise maximal 5 Vol.-% auf. Vorzugsweise weist das Abgas des zweiten Kühlerbereichs einen CO₂ Anteil von mehr als 75 Vol.-% auf. Vorzugsweise wird das Abgas des zweiten Kühlerbereichs vollständig oder teilweise dem Kalzinator zugeführt, wobei die Menge an dem Kalzinator zugeführten Abgases vorzugsweise einstellbar ist.

Das dem zweiten Kühlerbereich zugeführte Fluid weist einen Inertanteil von wenigstens 60 Vol.-%, insbesondere von wenigstens 80 Vol.-%, vorzugsweise von wenigstens 90 Vol.-%, auf. Der Inertanteil des Fluids besteht aus Wasser, Kohlendioxid oder Wasser und Kohlendioxid. Das dem zweiten Kühlerbereich zugeführte Fluid kann weitere Bestandteile aufweisen. So ist beispielsweise ein Restsauerstoffgehalt von 1 bis 5 Vol.-% üblich, um eine vollständige Verbrennung sicher zu stellen. Des Weiteren kann beispielsweise Argon als weiteres Inertgas enthalten sein. Des Weiteren kann ebenso Stickstoff als weiteres Inertgas enthalten sein. Ebenso können insbesondere Stickoxide und/oder Schwefeloxide, vorzugsweise nur in geringen Spuren, enthalten sein.

Gegenüber dem Stand der Technik, welcher an dieser Stelle Luft oder Stickstoff zuführt, sorgt die Verwendung von einem Fluid mit Wasser und/oder Kohlendioxid als Inertanteil dazu, dass dieses Gas die Tragkraft für das Rohmaterial erhöht, jedoch keine zusätzlichen Gase in das System einführt, welche bei einer späteren Abtrennung stören würden. Soll am Ende das Kohlendioxid abgetrennt werden, so ist dieses um so einfacher, je reiner das Vorwärmerabgas ist, insbesondere je weniger Stickstoff dieses enthält. Die Vermeidung von Stickstoff als Traggas für den Prozess führt also zu einer leichteren Abtrennbarkeit von CO₂ im Gesamtprozess.

Das Abgas des zweiten Kühlerbereichs dient vorzugsweise als Traggas in dem Kalzinator und sorgt für eine Erhöhung der Gasmenge innerhalb des Kalzinators und oder dem Vorwärmer. Dadurch wird eine Überhitzung des Kalzinators verhindert und die Feststoffbeladung in dem Kalzinatorgas gesenkt, sodass Materialablagerungen innerhalb des Kalzinators vermieden werden.

Das dem Ofen zugeführte Verbrennungsgas hat beispielsweise einen Sauerstoffanteil von mehr als 50 Vol.-%, insbesondere mehr als 80 Vol.-%, vorzugsweise mehr als 95 Vol.-%. Das Verbrennungsgas besteht beispielsweise vollständig aus reinem Sauerstoff, wobei der Sauerstoffanteil an dem Verbrennungsgas 100 Vol.-% beträgt.

Bei dem Sauerstoffanteil und dem CO₂ Anteil handelt es sich vorzugsweise um eine Angabe in Volumen%, insbesondere bezogen auf das trockene Gas.

Bei dem Ofen handelt es sich vorzugsweise um einen Drehrohrofen mit einen um seine Längsachse rotierbaren Drehrohr, das vorzugsweise in Förderrichtung des zu brennenden Materials leicht geneigt ist, sodass das Material bedingt durch die Rotation des Drehrohrs und die Schwerkraft in Förderrichtung bewegt wird. Der Ofen weist vorzugsweise an seinem einen Ende einen Materialeinlass zum Einlassen von vorgewärmten und vorkalzinierten Rohmehl und an seinem dem Materialeinlass gegenüberliegenden Ende einen Materialauslass zum Auslassen des gebrannten Klinkers in den Kühler auf. An dem materialauslassseitigen Ende des Ofens ist vorzugsweise der Ofenkopf angeordnet, der den Brenner zum Brennen des Materials und vorzugsweise einen Brennstoffeinlass zum Einlassen von Brennstoff in den Ofen, vorzugsweise zu dem Brenner, aufweist. Der Ofen weist vorzugsweise eine Sinterzone auf, in der das Material zumindest teilweise aufgeschmolzen wird und insbesondere eine Temperatur von 1500°C bis 1800°C, vorzugsweise 1450°C bis 1700°C aufweist.

An den Materialauslass des Ofens schließt sich vorzugsweise der Kühler zum Kühlen des Zementklinkers an. Innerhalb des Kühlers wird der zu kühlende Zementklinker vorzugsweise über eine Fördereinrichtung in Förderrichtung in Richtung des Auslasses des Kühlers transportiert. In Förderrichtung weist der Kühler vorzugsweise zumindest zwei, vorzugsweise drei Kühlerbereiche auf. Der in Förderrichtung vordere, erste Kühlerbereich schließt sich insbesondere direkt an den Ofen an und ist vorzugsweise derart angeordnet, dass der in dem Ofen gebrannte Zementklinker aus dem Materialauslass des Ofens, vorzugsweise schwerkraftbedingt, in den ersten Kühlerbereich fällt. Der erste Kühlerbereich weist beispielsweise einen statischen oder dynamischen Rost auf. Vorzugsweise wird dem Kühler ein erstes und ein zweites Kühlgas zugeführt. Insbesondere wird das erste Kühlgas dem ersten Kühlerbereich zugeführt. Der erste Kühlerbereich weist insbesondere einen Kühlgaseinlass unterhalb des statischen oder dynamischen Rosts auf, durch welchen das erste Kühlgas eingeleitet wird und den statischen oder dynamischen Rost und den darauf liegenden zu kühlenden Zementklinker von unten durchströmt. Der erste Kühlerbereich weist vorzugsweise einen Abgasauslass zum Auslassen des ersten Kühlgases, wobei der Abgasauslass mit dem Ofen, insbesondere dem Ofenkopf verbunden ist, sodass das Abgas zu dem Ofen geleitet wird und vorzugsweise vollständig das Verbrennungsgas des Ofens bildet.

Insbesondere wird das zweite Kühlgas dem zweiten Kühlerbereich zugeführt. Der zweite Kühlerbereich weist vorzugsweise einen dynamischen Rost zum Transport des zu kühlenden Zementklinkers auf, wobei insbesondere ein Kühlgaseinlass unterhalb des dynamischen Rosts angeordnet ist, durch welchen das zweite Kühlgas eingeleitet wird und den dynamischen Rost und den darauf liegenden zu kühlenden Zementklinker von unten durchströmt. Der zweite Kühlerbereich weist vorzugsweise einen Abgasauslass zum Auslassen des zweiten Kühlgases auf. Der zweite Kühlerbereich schließt sich vorzugsweise in Förderrichtung des Zementklinkers direkt an den ersten Kühlerbereich an und ist insbesondere gastechnisch von dem ersten Kühlbereich getrennt, sodass das erste Kühlgas ausschließlich durch den ersten Kühlerbereich strömt nicht in den zweiten Kühlbereich gelangt. Das zweite Kühlgas strömt vorzugsweise ausschließlich durch den zweiten Kühlerbereich und gelangt nicht in den ersten Kühlbereich. Zur gastechnischen Trennung des ersten und des zweiten Kühlerbereichs weist der Kühler vorzugsweise ein Trennmittel, wie eine Klappe, einen Vorhang oder eine Gasscheide auf. Bei dem Trennmittel handelt es sich beispielsweise um eine Druckdifferenz zwischen dem ersten und dem zweiten Kühlerbereich, wodurch eine Trennung der Kühlgase innerhalb der Kühlerbereich erreicht wird.

Dem Kühler wird vorzugsweise zusätzlich ein drittes Kühlgas zugeführt, das in einen dritten Kühlerbereich eingeleitet wird. Der dritte Kühlerbereich weist vorzugsweise einen dynamischen Rost zum Transport des zu kühlenden Zementklinkers auf, wobei insbesondere ein Kühlgaseinlass unterhalb des dynamischen Rosts angeordnet ist, durch welchen das dritte Kühlgas eingeleitet wird und den dynamischen Rost und den darauf liegenden zu kühlenden Zementklinker von unten durchströmt. Der dritte Kühlerbereich weist vorzugsweise einen Abgasauslass zum Auslassen des dritten Kühlgases als Kühlerabluft auf. Der dritte Kühlerbereich schließt sich vorzugsweise in Förderrichtung des Zementklinkers direkt an den zweiten Kühlerbereich an und ist insbesondere gastechnisch von dem zweiten Kühlbereich getrennt, sodass das zweite Kühlgas ausschließlich durch den zweiten Kühlerbereich strömt und nicht in den dritten Kühlbereich gelangt. Das dritte Kühlgas strömt vorzugsweise ausschließlich durch den dritten Kühlerbereich und gelangt nicht in den ersten oder zweiten Kühlbereich. Zur gastechnischen Trennung des zweiten und des dritten Kühlerbereichs weist der Kühler vorzugsweise ein weiteres Trennmittel, wie eine Klappe, einen Vorhang oder eine Gasscheide auf.

Das vorangehend beschriebene Verfahren führt zu einem geringeren CO₂ Partialdruck in dem Ofen, wodurch eine Restkalzinierung des nicht vollständig kalzinierten Materials erfolgt und wobei lediglich eine geringe Wärmeenergie für diese Restkalzination aufgewendet werden muss. Bedingt durch den erhöhten CO₂ Partialdruck ist die CO₂ Konzentration bezogen auf das feuchte Abgas von vorzugsweise geringer als 40 Vol.-%, und der Aufwand für das Abreinigen von so genannten Ansätzen wird verringert. Unter Ansätzen sind feste Phasen zu versehen, die im allgemeinen Mineralphasen sind und ab Temperaturen oberhalb von 850°C in hohem Maß entstehen. Bei den Mineralphasen kann es sich bspw. um Spurrite, Belitphasen handeln. Um den Abreinigungsaufwand in einem passenden Rahmen zu halten, kann der Vorcalcinationsgrad reduziert werden, indem der Kalzinator mit Vorkalzinationsgraden von weniger als 90 Vol.-% bzw. bei geringeren Temperaturen betrieben wird. Eine Restkalzination erfolgt mit dem vorangehend beschriebenen Verfahren im Ofen aufgrund des geringeren CO₂ Partialdruckes schneller bei gleichen Temperaturen, wobei die Kalzination des Rohmaterials beispielsweise auch spontan ablaufen kann.

Gemäß einer ersten Ausführungsform wird dem ersten und dem zweiten Kühlerbereich jeweils separat ein Kühlgas zugeführt, wobei das dem zweiten Kühlerbereich zugeführte Kühlgas einen Sauerstoffanteil von maximal 15 Vol.-%, insbesondere 10 Vol.-%, vorzugsweise 5 Vol.-% aufweist. Das dem zweiten Kühlerbereich zugeführte zweite Kühlgas weist vorzugsweise einen CO₂- Anteil von mindestens 75 Vol.-%, insbesondere mindestens 80 Vol.-%, vorzugsweise mindestens 90 Vol.-% auf. Vorzugsweise wird dem zweiten Kühlgas und/ oder dem Abgas des zweiten Kühlerbereichs Sauerstsoff zugeführt, sodass der Sauerstoffgehalt des Abgases vor dem Eintritt in den Kalzinator maximal 15 Vol.-%, insbesondere 10 Vol.-%, vorzugsweise 5 Vol.-% beträgt.

Gemäß einer weiteren Ausführungsform wird die Sauerstoffkonzentration des Kalzinatorabgases stromabwärts des Kalzinators ermittelt und die Sauerstoffkonzentration des dem Kalzinator zugeführten Abgases des zweiten Kühlerbereichs in Abhängigkeit der ermittelten Sauerstoffkonzentration geregelt.

Vorzugsweise wird der Sauerstoffgehalt des Kalzinatorabgases mittels einer Messeinrichtung ermittelt und die Menge an Abgas und/ oder der Sauerstoffanteil des Abgases des zweiten Kühlerbereichs in Abhängigkeit des ermittelten Sauerstoffanteils geregelt, insbesondere erhöht oder verringert. Insbesondere wird der Volumenstrom des Abgases des zweiten Kühlerbereichs konstant gehalten. Der ermittelte Sauerstoffanteil wird vorzugsweise mit einem vorab bestimmten Grenzwert verglichen und bei einer Abweichung von diesem Grenzwert wird die Menge an dem Kalzinator zugeführten Abgases des zweiten Kühlerbereichs und/ oder der Sauerstoffanteil des Abgases erhöht oder verringert. Bei einer Überschreitung des Grenzwertes des Sauerstoffanteils, wird die Menge an dem Kalzinator zugeführten Abgases des zweiten Kühlerbereichs und/ oder der Sauerstoffanteil des Abgases vorzugsweise verringert. Bei einer Unterschreitung des Grenzwertes des Sauerstoffanteils, wird die Menge an dem Kalzinator zugeführten Abgases des zweiten Kühlerbereichs und/ oder der Sauerstoffanteil des Abgases vorzugsweise erhöht.

Das Abgas des zweiten Kühlerbereichs wird dem Kalzinator zugeführt und bildet beispielsweise teilweise das Verbrennungsgas des Kalzinators. Das Abgas des Ofens bildet ebenfalls zumindest teilweise oder vollständig das Verbrennungsgas des Kalzinators. Dem Ofen und dem Kalzinator wird vorzugsweise eine vorabbestimmte Menge an Sauerstoff zugeführt, wobei die jeweiligen Anteile an Sauerstoff zu dem Ofen und dem Kalzinator vorzugsweise einstellbar sind. Der Sauerstoffgehalt der dem Ofen zugeführten Verbrennungsluft wird vorzugsweise in Abhängigkeit des Sauerstoffgehalts des dem Kalzinator zugeführten Abgases des zweiten Kühlbereichs eingestellt. Eine hohe Sauerstoffkonzentration in dem Verbrennungsgas zu dem Ofen, insbesondere in der Sinterzone des Ofens, ermöglicht eine verbesserte Verbrennungskinetik, wobei die Aufbereitung der Brennstoffe vereinfacht wird. Des Weiteren werden die Komplexität und die Betriebskosten der Ofenbrenner reduziert. Ein optional vorgelagerter Mahlprozess wird ebenfalls vereinfacht oder verursacht geringere Betriebskosten. Es ist ebenfalls denkbar, dass ein hoher Anteil an Ersatzbrennstoffen eingesetzt wird. Eine hohe Sauerstoffkonzentration innerhalb des Ofens sorgt für eine hohe Sinterzonentemperatur, wobei dadurch ein Klinker mit einem höheren Alitgehalt erzeugt wird, was eine Reduzierung des Klinkeranteils im Zement ermöglicht. Der Klinker wird beispielsweise durch weniger CO₂ intensive Materialien, wie Kalkstein, Flugaschen, kalzinierte Tone oder ähnliches ersetzt, woraus eine geringere CO₂ Emission des Zementes und nachfolgender Produkte bei gleichen Festigkeitswerten resultiert. Eine hohe Sinterzonentemperatur ermöglicht des Weiteren eine Reduzierung der Verweilzeit des Feststoffes im Ofen, da die Klinkerphasenbildung schneller erfolgt. Hierdurch ist es möglich, den Ofen mit einem höheren Klinkerdurchsatz zu betreiben

Gemäß einer weiteren Ausführungsform wird zumindest ein Teil des Abgases des zweiten Kühlerbereichs dem Vorwärmer zugeführt. Vorzugsweise ist die Menge an Abgas des zweiten Kühlerbereichs zu dem Kalzinator und dem Vorwärmer einstellbar. Insbesondere ist ein Dosierorgan, wie ein Ventil oder eine Klappe in einer Leitung zwischen dem zweiten Kühlerbereich und dem Vorwärmer oder Kalzinator angeordnet. Eine Leitung des Abgases zumindest teilweise zu dem Vorwärmer ermöglicht eine optimale Einstellung der Brennbedingungen in dem Kalzinator.

Gemäß einer weiteren Ausführungsform wird das Abgas des Vorwärmers einer Konditionierungseinrichtung zugeführt. Bei der Konditionierungseinrichtung handelt es sich beispielsweise um einen Filter, Wärmetauscher, Gasmischer, Kondensator oder Spühturm. Vorzugsweise ist die Konditionierungseinrichtung in Strömungsrichtung des Gases hinter dem Vorwärmer angeordnet und insbesondere mit dem zweiten oder dritten Kühlerbereich verbunden, sodass das Abgas der Konditionierungseinrichtung das erste oder zweite Kühlgas bildet. In der Konditionierungseinrichtung wird das Gas vorzugsweise entfeuchtet und/ oder gereinigt.

Gemäß einer weiteren Ausführungsform wird das Gas im Anschluss an die Konditionierungseinrichtung dem zweiten Kühlerbereich zugeführt. Vorzugsweise bildet das mittels der Konditionierungseinrichtung behandelte Abgas des Vorwärmers zumindest teilweise oder vollständig das zweite Kühlgas.

Gemäß einer weiteren Ausführungsform wird das Gas im Anschluss an die Konditionierungseinrichtung dem dritten Kühlerbereich zugeführt. Vorzugsweise bildet das mittels der Konditionierungseinrichtung behandelte Abgas des Vorwärmers zumindest teilweise oder vollständig das dritte Kühlgas.

Das Abgas des dritten Kühlerbereichs wird gemäß einer weiteren Ausführungsform dem zweiten Kühlerbereich zugeführt. Vorzugsweise wird dem dritten Kühlerbereich Wasser zugeführt, wobei der Wassergehalt des Abgases des dritten Kühlerbereichs vorzugsweise eingestellt wird. Vor dem Eintritt in den zweiten Kühlerbereich wird das Abgas des dritten Kühlbereichs vorzugsweise entstaubt und/ oder gekühlt.

Gemäß einer weiteren Ausführungsform wird dem zweiten Kühlerbreich Wasser zugeführt. Das Wasser wird vorzugsweise über eine Befeuchtungseinrichtung dem zweiten Kühlerbereich zugeführt. Die Befeuchtungseinrichtung umfasst vorzugsweise eine Mehrzahl von Sprühdüsen zur Eindüsung von Wasser in den zweiten Kühlerbereich. Insbesondere wird das Wasser separat zu dem zweiten Kühlgas in den zweiten Kühlerbereich eingeleitet. Vorzugsweise wird in dem zweiten Kühlerbereich ein Wassergehalt von mehr als 10 Vol.-%, insbesondere mehr als 20 Vol.-%, vorzugsweise mehr als 30 Vol.-%, mittels der Befeuchtungseinrichtung eingestellt. Dadurch wird in dem Kalzinator ebenfalls eine entsprechende Feuchte eingestellt. Dies bewirkt einen verringerten Partialdruck des CO₂ im Kalzinator. Das Wasser in dem Abgas, insbesondere dem Vorwärmerabgas, kann leicht auskondensiert werden, was den CO2 Partialdruck im Abgas erhöht, wodurch eine anschließende Abscheidung von CO₂ vereinfacht wird.

Vorzugsweise wird die Temperatur und/ oder der Volumenstrom des Abgases des zweiten Kühlerbereichs mittels einer Messeinrichtung ermittelt und die Menge an über die Befeuchtungseinrichtung in den zweiten Kühlerbereich eingeleitetem Wasser wird in Abhängigkeit der ermittelten Temperatur und/ oder Volumenstrom geregelt, insbesondere erhöht oder verringert. Insbesondere wird der Volumenstrom des Abgases konstant gehalten. Der ermittelte Volumenstrom und/ oder die ermittelte Temperatur werden vorzugsweise mit einem jeweiligen vorab bestimmten Grenzwert verglichen und bei einer Abweichung von diesem Grenzwert wird die Menge an Wasser in den zweiten Kühlerbereich erhöht oder verringert. Bei einer Überschreitung des Grenzwertes des Volumenstroms und/ oder der Temperatur, wird die Menge an Wasser in den zweiten Kühlerbereich vorzugsweise erhöht. Bei einer Unterschreitung des Grenzwertes des Volumenstroms und/ oder der Temperatur, wird die Menge an Wasser in den zweiten Kühlerbereich vorzugsweise verringert.

Gemäß einer weiteren Ausführungsform weist das dem zweiten Kühlerbereich zugeführte Kühlgas einen Wassergehalt von mehr als 10 Vol.-%, insbesondere mehr als 20 Vol.-%, vorzugsweise mehr als 30 Vol.-%, auf. Vorzugsweise weist das Abgas des zweiten Kühlerbereichs einen Wassergehalt von mehr als 10 Vol.-%, insbesondere mehr als 20 Vol.-%, vorzugsweise mehr als 30 Vol.-%, auf.

Gemäß einer weiteren Ausführungsform wird das dem zweiten Kühlerbereich zugeführte Fluid dem Vorwärmerabgas entnommen. Hierdurch wird eine Kreisführung des Traggases erreicht, wodurch keine zusätzlichen Gase, insbesondere kein zusätzlicher Stickstoff zugeführt wird, welcher anschließend wieder aufwändig abgetrennt werden muss.

Gemäß einer weiteren Ausführungsform wird der Gasstrom des Vorwärmerabgases geteilt und ein Teilstrom des Vorwärmerabgases wird dem zweiten Kühlerbereich zugeführt.

Gemäß einer weiteren Ausführungsform wird der Gasstrom des Vorwärmerabgases entfeuchtet und wenigstens ein Teil des flüssig abgetrennten Wassers wird dem zweiten Kühlerbereich zugeführt. Besonders bevorzugt erfolgt dieses Zuführen durch Einsprühen, sodass auch die Verdunstungswärme zum Abkühlen des Produkts genutzt wird.

Gemäß einer weiteren Ausführungsform wird der Gasstrom des Vorwärmerabgases geteilt und ein Teilstrom des Vorwärmerabgases wird dem zweiten Kühlerbereich zugeführt. Zusätzlich wird der Gasstrom des Vorwärmerabgases entfeuchtet und wenigstens ein Teil des flüssig abgetrennten Wassers wird dem zweiten Kühlerbereich zugeführt.

Die Beschreibung umfasst auch eine Zementherstellungsanlage aufweisend
- einen Vorwärmer zum Vorwärmen von Rohmehl,
- einen Kalzinator zum Kalzinieren des vorgewärmten Rohmehls,
- einen Ofen zum Bennen des Rohmehls zu Zementklinker, und
- einen Kühler zum Kühlen des Zementklinkers, wobei der Kühler in Förderrichtung des Klinkers einen ersten Kühlerbereich und einen zweiten Kühlerbereich aufweist und wobei der erste Kühlerbereich gastechnisch mit dem Ofen verbunden ist, sodass das Abgas des ersten Kühlerbereichs dem Ofen als Verbrennungsgas zuführbar ist.

Der zweite Kühlerbereich ist gastechnisch mit dem Kalzinator verbunden, sodass das Abgas des zweiten Kühlerbereichs dem Kalzinator und optional zusätzlich dem Vorwärmer zuführbar ist.

Der zweite Kühlerbereich ist derart mit dem Vorwärmerabgas 30 verbunden, sodass ein Teil des Vorwärmerabgasstromes in den zweiten Kühlerbereich geleitet wird. Gegenüber dem Stand der Technik, welcher an dieser Stelle Luft oder Stickstoff zuführt sorgt die Verwendung von Vorwärmerabgas dazu, dass dieses Gas im Kreis geführt zwar die Tragkraft für das Rohmaterial erhöht, jedoch keine zusätzlichen Gase in das System einführt. Soll am Ende das Kohlendioxid abgetrennt werden, so ist dieses um so einfacher, je reiner das Vorwärmerabgas ist, insbesondere je weniger Stickstoff dieses enthält. Die Vermeidung von Stickstoff als Traggas für den Prozess führt also zu einer leichteren Abtrennbarkeit von CO₂ im Gesamtprozess.

Die mit Bezug auf das Verfahren zur Herstellung von Zementklinker beschriebenen Vorteile und Ausgestaltungen treffen in vorrichtungsgemäßer Entsprechung auch auf die Zementherstellungsanlage zu.

Vorzugsweise ist der zweite Kühlerbereich über eine Leitung zum Leiten von Gasen mit dem Kalzinator verbunden, die sich insbesondere von einem Kühlgasauslass des zweiten Kühlerbereichs zu einem Gaseinlass des Kalzinators erstreckt. Der zweite Kühlerbereich ist optional über eine Leitung zum Leiten von Gasen mit dem Vorwärmer verbunden. Der Kalzinator weist vorzugsweise eine Steigleitung auf, durch welche das Abgas des Ofens und das zu kalzinierende Rohmaterial zumindest teilweise im Gleichstrom strömt. Des Weiteren weist der Kalzinator vorzugsweise eine mit der Steigleitung verbundene Brennkammer oder einen Brenner zum Verbrennen von Brennstoff innerhalb des Kalzinators auf.

Gemäß einer Ausführungsform ist in Gasströmungsrichtung hinter dem Vorwärmer eine Konditionierungseinrichtung zur Behandlung des Abgases des Vorwärmers angeordnet.

Gemäß einer weiteren Ausführungsform weist der Kühler einen dritten Kühlerbereich auf, der sich an den zweiten Kühlbereich anschließt und wobei die Konditionierungseinrichtung gastechnisch mit dem zweiten oder dem dritten Kühlerbereich verbunden ist.

Gemäß einer weiteren Ausführungsform ist der dritte Kühlerbereich mit dem zweiten Kühlerbereich zur Rückführung des Abgases des dritten Kühlerbereichs in den zweiten Kühlerbereich verbunden.

Gemäß einer weiteren Ausführungsform weist der Kühler eine Befeuchtungseinrichtung zur Befeuchtung des Kühlgases innerhalb des Kühlers auf.

Gemäß einer weiteren Ausführungsform ist der zweite Kühlerbereich direkt gasführend mit dem Vorwärmerabgas verbunden. Hierdurch kann direkt ein Teilstrom des Vorwärmerabgases in den zweiten Kühlerbereich geführt werden.

Gemäß einer weiteren Ausführungsform wird das Vorwärmerabgas durch einen Entfeuchter geführt. Der Entfeuchter ist flüssigkeitsführend mit dem zweiten Kühlerbereich verbunden. Insbesondere wird das im Entfeuchter abgetrennte flüssige Wasser durch eine Sprühvorrichtung in den zweiten Kühlerbereich eingebracht.

### Beschreibung der Zeichnungen

Die Erfindung ist nachfolgend anhand mehrerer Ausführungsbeispiele mit Bezug auf die beiliegenden Figuren näher erläutert, wobei die Zementherstellungsanlage als solche nicht Gegenstand der Erfindung ist.
- Fig. 1: zeigt eine schematische Darstellung einer Zementherstellungsanlage in einem Fließschema gemäß einem Ausführungsbeispiel.
- Fig. 2: zeigt eine schematische Darstellung einer Zementherstellungsanlage in einem Fließschema gemäß einem weiteren Ausführungsbeispiel.
- Fig. 3: zeigt eine schematische Darstellung einer Zementherstellungsanlage in einem Fließschema gemäß einem Ausführungsbeispiel.
- Fig. 4: zeigt eine schematische Darstellung einer Zementherstellungsanlage in einem Fließschema gemäß einem weiteren Ausführungsbeispiel.

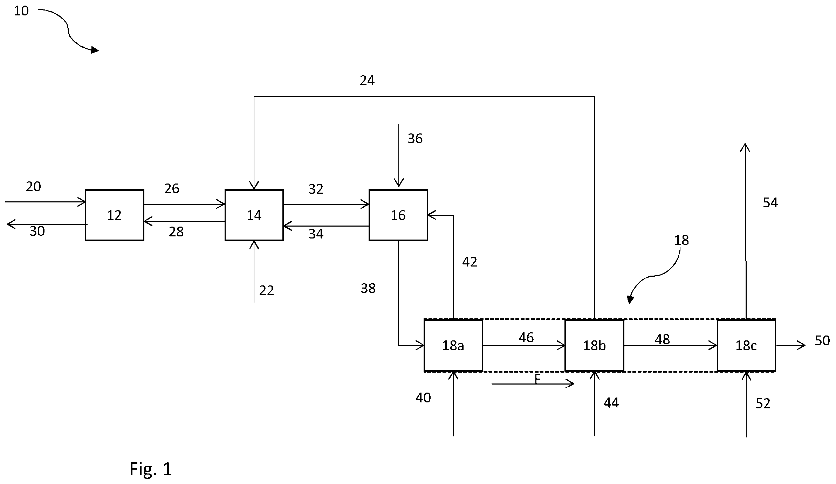

Fig. 1 zeigt eine Zementherstellungsanlage 10 mit einem beispielsweise einsträngigen Vorwärmer 12 zur Vorwärmung von Rohmehl, einen Kalzinator 14 zum Kalzinieren des Rohmehls, einen Ofen 16, insbesondere einen Drehrohrofen zum Brennen des Rohmehls zu Klinker und einen Kühler 18 zum Kühlen des in dem Ofen 16 gebrannten Klinkers.

Der Vorwärmer 12 umfasst vorzugsweiseeine Mehrzahl von Zyklonen zum Abscheiden des Rohmehls aus dem Rohmehlgasstrom. Beispielsweise weist der Vorwärmer 12 fünf Zyklone auf, die in vier Zyklonstufen untereinander angeordnet sind. Der Vorwärmer 12 weist insbesondere einen Materialeinlass zum Einlassen von Rohmaterial 20, insbesondere Rohmehl, vorzugsweise in die oberste Zyklonstufe des Vorwärmers 12 auf. Das Rohmaterial 20 durchströmt nacheinander die Zyklone der Zyklonstufen des Vorwärmers 12 im Gegenstrom zu dem Ofen- und/oder Kalzinatorabgas und wird dadurch zu Heißmehl 26 erwärmt. Beispielsweise ist zwischen der letzten und der vorletzten Zyklonstufe der Kalzinator 14 angeordnet. Der Kalzinator 14 weist vorzugsweise ein Steigrohr mit mindestens einer Brennstelle zum Erhitzen des im Vorwärmer erwärmten Rohmaterials 26 auf, sodass eine Kalzinierung des Rohmehls in dem Kalzinator 14 erfolgt. Des Weiteren weist der Kalzinator 14 einen Brennstoffeinlass zum Einlassen von Brennstoff 22 in das Steigrohr des Kalzinators 14 auf. Der Kalzinator 14 weist vorzugsweise auch einen Gaseinlass zum Einlassen eines Gases, insbesondere Traggas 24, in das Steigrohr des Kalzinators 14 auf. Das Kalzinatorabgas 28 wird in den Vorwärmer 12, vorzugsweise in die vorletzte Zyklonstufe eingeleitet und verlässt den Vorwärmer 12 hinter der obersten Zyklonstufe als Vorwärmerabgas 30.

In Strömungsrichtung des Rohmehls ist dem Vorwärmer 12 und dem Kalzinator 14 der Ofen 16 nachgeschaltet, sodass das in dem Vorwärmer 12 vorgewärmte und in dem Kalzinator 14 kalzinierte Rohmaterial 32 in den Ofen 16 strömt. Der Materialeinlass des Ofens 16 ist vorzugsweise direkt mit dem Steigrohr des Kalzinators 14 verbunden, sodass das Ofenabgas 34 in den Kalzinator 14 und anschließend in den Vorwärmer 12 strömt. Bei dem Ofen 16 handelt es sich beispielhaft um einen Drehrohrofen mit einem um seine Längsachse rotierbaren Drehrohr, das in einem leicht abfallenden Winkel angeordnet ist. Der Ofen 16 weist vorzugsweise an dem materialauslasseitigen Ende innerhalb des Drehrohrs einen Brenner und einen zugehörigen Brennstoffeinlass zum Einlass von Brennstoff 36 in den Ofen 16 auf. Der Materialauslass des Ofens 16 ist an dem dem Materialeinlass gegenüberliegenden Ende des Drehrohrs angeordnet, sodass das zu brennende Rohmaterial 32 innerhalb des Drehrohrs durch die Rotation des Drehrohrs in Richtung des Brenners und des Materialauslasses gefördert wird. Das Rohmaterial 32 wird innerhalb des Ofens 16 zu Zementklinker 38 gebrannt. Vorzugsweise ist die Temperatur innerhalb des Ofens 16, insbesondere in der Sinterzone des Ofens 16, etwa 1450°C bis 1800°C, vorzugsweise 1500°C bis 1700°C.

An den Materialauslass des Ofens 16 schließt sich der Kühler 18 zum Kühlen des Klinkers an. Der Klinker wird In Förderrichtung F durch den Kühler 18 gefördert. Der Kühler 18 weist in Förderrichtung F des zu kühlenden Klinkers 38 einen ersten Kühlerbereich 18a und einen zweiten Kühlerbereich 18b auf, der sich in Förderrichtung F an den ersten Kühlerbereich 36 anschließt. Des Weiteren weist der Kühler 18 einen dritten Kühlerbereich 18c auf, der sich in Förderrichtung F an den zweiten Kühlerbereich 18b anschließt. Der Ofen 16 ist über den Materialauslass des Ofens 16 mit dem Kühler 18 verbunden, sodass der in dem Ofen 16 gebrannte Klinker 38 in den Kühler 18 fällt.

Der erste Kühlerbereich 18a ist vorzugsweise unterhalb des Materialauslasses des Ofens 16 angeordnet, sodass der Zementklinker 38 von dem Ofen 16 in den ersten Kühlerbereich 18a fällt. Der erste Kühlerbereich 18a stellt einen Einlaufbereich des Kühlers 18 dar und weist vorzugsweise einen statischen Rost auf, der den aus dem Ofen 16 austretenden Klinker 38 aufnimmt. Der statische Rost ist insbesondere vollständig in dem ersten Kühlerbereich 18a des Kühlers 18 angeordnet. Vorzugsweise fällt der Klinker 38 aus dem Ofen 16 direkt auf den statischen Rost. Der statische Rost 40 erstreckt sich vorzugsweise derart, sodass der Klinker in Förderrichtung F entlang des statischen Rostes auf diesem gleitet. Der erste Kühlerbereich 18a weist beispielsweise zusätzlich zu dem statischen Rost oder ausschließlich einen dynamischen Rost zum Fördern des Klinkers in Förderrichtung F durch den Kühler 18.

An den ersten Kühlerbereich 18a, schließt sich der zweite Kühlerbereich 18b des Kühlers 18 an, dem der in dem ersten Kühlerbereich 18a gekühlte Heißklinker 46 zugeführt wird. In dem ersten Kühlerbereich 18a des Kühlers 18 wird der Klinker insbesondere auf eine Temperatur von weniger als 1100°C abgekühlt, wobei die Abkühlung derart erfolgt, dass ein vollständiges Erstarren von in dem Klinker vorhandenen flüssigen Phasen in feste Phasen erfolgt. Beim Verlassen des ersten Kühlerbereich 18a des Kühlers 18 liegt der Heißklinker 46 vorzugsweise vollständig in der festen Phase und einer Temperatur von maximal 1100°C, insbesondere maximal 1000°C, vor. In dem zweiten Kühlerbereich 18b des Kühlers 18 wird der Heißklinker 48 weiter abgekühlt, vorzugsweise auf eine Temperatur von weniger als 700°C. In dem dritten Kühlerbereich 18c wird der Klinker insbesondere auf eine Temperatur von etwa 100°C oder weniger abgekühlt und verlässt den Kühler 18 als Kaltklinker 50. Vorzugsweise kann der zweite Kühlgasstrom auf mehrere Teilgasströme aufgeteilt werden, die unterschiedliche Temperaturen aufweisen.

Der statische oder dynamische Rost des ersten Kühlerbereichs 18a weist beispielsweise Durchlässe auf, durch welche ein erstes Kühlgas 40 in den ersten Kühlerbereich 18a eintritt. Das erste Kühlgas 40 strömt vorzugsweise von unten durch den statischen oder dynamischen Rost in den ersten Kühlerbereich 18a. Bei dem ersten Kühlgasstrom 40 handelt es sich beispielsweise um reinen Sauerstoff oder ein Gas mit einem Anteil von 15 Vol Vol.-% oder weniger Stickstoff und einem Anteil von 50 Vol Vol.-% oder mehr Sauerstoff. Das erste Kühlgas 40 durchströmt den Klinker und strömt anschließend in den Ofen 16. Das erste Kühlgas 40, insbesondere das Abgas des ersten Kühlerbereichs 18a, bildet beispielsweise teilweise oder vollständig das Verbrennungsgas 42 des Ofens 16 aus. Der hohe Anteil an Sauerstoff in dem Verbrennungsgas 42 führt zu einem Vorwärmerabgas 30, das im Wesentlichen aus CO2 und Wasserdampf besteht, und weist den Vorteil auf, dass auf aufwändige nachgeschaltete Reinigungsverfahren zur Abgasreinigung verzichtet werden kann. Des Weiteren wird eine Reduktion der Prozessgasmengen erreicht, sodass die Anlage erheblich kleiner dimensioniert werden kann.

Der erste und der zweite Kühlerbereich 18a und 18b sind vorzugsweise über ein Trennmittel gastechnisch voneinander getrennt, sodass das erste Kühlgas 40 ausschließlich in den ersten Kühlerbereich 18a strömt und diesen als Abgas 42, insbesondere Verbrennungsgas 42 für den Ofen 16, verlässt. Das erste Kühlgas 40 gelangt vorzugsweise nicht in den zweiten oder dritten Kühlerbereich 18b, 18c. Das zweite Kühlgas 44 strömt vorzugsweise ausschließlich in den zweiten Kühlerbereich 18b und verlässt diesen als Abgas 24, insbesondere Verbrennungsgas 24 für den Kalzinator 14. Das dritte Kühlgas 52 strömt vorzugsweise ausschließlich in den dritten Kühlerbereich 18c und verlässt diesen als Kühlerabluft 54. Es ist optional denkbar, dass der erste und der zweite Kühlerbereich 18a, 18b gastechnisch nicht voneinander getrennt sind, sodass die Kühlgase 40 und 44 sowohl in den ersten als auch in den zweiten Kühlbereich 18a, 18b strömen.

Vorzugsweise ist zwischen dem ersten und dem zweiten Kühlerbereich 18a, 18c und optional zwischen dem zweiten und dem dritten Kühlerbereich 18b und 18c ein Trennmittel zur gastechnischen Trennung der Kühlerbereiche angebracht. Bei dem Trennmittel handelt es sich beispielsweise um ein mechanisches Trennmittel, wie eine Klappe oder einen Vorhang. Das Trennmittel kann auch eine Gasscheide umfassen, bei welcher ein Trenngas, wie CO2 zwischen den Kühlerabschnitten 18a-c aufgegeben wird. Bei dem Trennmittel kann es sich auch um eine Druckdifferenz handeln, die zwischen dem ersten und dem zweiten Kühlerbereich eingestellt wird. Eine solche Druckdifferenz bewirkt eine gezielte Trennung der Gase der Kühlbereiche.

Innerhalb des Kühlers 18 wird der zu kühlende Klinker in Förderrichtung F bewegt. Der zweite Kühlerbereich 18b weist vorzugsweise einen dynamischen, insbesondere bewegbaren, Rost auf, der sich in Förderrichtung F an den ersten Kühlerbereich 18b anschließt. Ein dynamischer Rost weist insbesondere eine Fördereinheit auf, die den Klinker in Förderrichtung F transportiert. Bei der Fördereinheit handelt es sich beispielsweise um einen Schubbodenförderer, der eine Mehrzahl von Förderelementen zum Transport des Schüttguts aufweist. Bei den Förderelementen handelt es sich bei einem Schubbodenförderer um eine Mehrzahl von Planken, vorzugsweise Rostplanken, die einen Belüftungsboden ausbilden. Die Förderelemente sind nebeneinander angeordnet und in Förderrichtung F und entgegen der Förderrichtung F bewegbar. Die als Förderplanken oder Rostplanken ausgebildeten Förderelemente sind vorzugsweise von Kühlgas durchströmbar, über die gesamte Länge des zweiten Kühlerbereichs 18b des Kühlers 18 angeordnet und bilden die Oberfläche aus, auf der der Klinker aufliegt. Die Fördereinheit kann auch ein Schubförderer sein, wobei die Fördereinheit einen stationären von Kühlgasstrom durchströmbaren Belüftungsboden und eine Mehrzahl von relativ zu dem Belüftungsboden bewegbaren Förderelementen aufweist. Die Förderelemente des Schubförderers sind vorzugsweise oberhalb des Belüftungsbodens angeordnet und weisen quer zur Förderrichtung verlaufende Mitnehmer auf. Zum Transport des Klinkers entlang des Belüftungsbodens sind die Förderelemente in Förderrichtung F und entgegen der Förderrichtung F bewegbar. Die Förderelemente des Schubförderers und des Schubbodenförderers können nach dem "walking-floor-Prinzip" bewegbar sein, wobei die Förderelemente alle gleichzeitig in Förderrichtung und ungleichzeitig entgegen der Förderrichtung bewegt werden. Alternativ dazu sind auch andere Förderprinzipien aus der Schüttguttechnik denkbar.

Unterhalb des dynamischen Rosts sind optional eine Mehrzahl von Ventilatoren angeordnet, mittels welcher das zweite Kühlgas 44 von unten durch den dynamischen Rost geblasen wird. Bei dem zweiten Kühlgas 44 handelt es sich vorzugsweise um ein sauerstoffarmes Gas mit einem Sauerstoffanteil von maximal 15 Vol.-%, insbesondere maximal 10 Vol.-%, vorzugsweise maximal 5 Vol.-%. Der Sauerstoffanteil ist insbesondere der Sauerstoff in Vol Vol.-% bezogen auf das trockene Gas. Insbesondere umfasst das zweite Kühlgas 44 eine Mischung aus CO₂ und Wasser. Das Abgas 24 des zweiten Kühlerbereichs 18b wird vorzugsweise vollständig oder teilweise dem Kalzinator 14 zugeführt und bildet vorzugsweise ein Traggas innerhalb des Kalzinators 14 aus. Das in den Kalzinator 14 eingeleitete Traggas 24 weist vorzugsweise einen Sauerstoffanteil von maximal 15 Vol.-%, insbesondere maximal 10 Vol.-%, vorzugsweise maximal 5 Vol.-% auf. Um einen solchen Sauerstoffanteil zu erreichen, weist vorzugsweise das Kühlgas einen solchen Sauerstoffanteil auf oder das Abgas 24 des zweiten Kühlerbereichs 18b wird vor dem Eintritt in den Kalzinator einer

Sauerstoffanreicherung unterzogen, um einen Sauerstoffgehalt von maximal 15 Vol.-% in dem Abgas 24 einzustellen. Vorzugsweise weist das Traggas 24, insbesondere das Abgas des zweiten Kühlerbereichs 18b einen CO₂-Gehalt von mindestens 75 Vol.-% bezogen auf das trockene Gas auf. Das Traggas 24 sorgt für einen verbesserten Feststofftransport innerhalb des Kalzinators 14, wobei die Gasmenge innerhalb des Kalzinators 14 erhöht wird. Der geringe Sauerstoffanteil und hohe CO₂-Anteil in dem Traggas ermöglicht eine einfache Abscheidung des CO₂ in dem Vorwärmerabgas 30, beispielsweise mit einem Kryogenverfahren.

Die Menge an Traggas 24, das in den Kalzinator 14 geleitet wird, ist vorzugsweise einstellbar. Insbesondere wird die Menge an Traggas 24 und oder der Sauerstoffanteil des Traggases 24 geregelt. Vorzugsweise wird der Sauerstoffgehalt des Kalzinatorabgases 28 mittels einer Messeinrichtung ermittelt und die Menge an Traggas und/ oder der Sauerstoffanteil des Traggases 24 in Abhängigkeit des ermittelten Sauerstoffanteils geregelt, insbesondere erhöht oder verringert. Insbesondere wird der Volumenstrom des Abgases 24 konstant gehalten. Der ermittelte Sauerstoffanteil wird vorzugsweise mit einem vorab bestimmten Grenzwert verglichen und bei einer Abweichung von diesem Grenzwert wird die Menge an Traggas 24 und/ oder der Sauerstoffanteil des Traggases 24 erhöht oder verringert. Bei einer Überschreitung des Grenzwertes des Sauerstoffanteils, wird die Menge an Traggas 24 und/ oder der Sauerstoffanteil des Traggases 24 vorzugsweise verringert. Bei einer Unterschreitung des Grenzwertes des Sauerstoffanteils, wird die Menge an Traggas 24 und/ oder der Sauerstoffanteil des Traggases 24 vorzugsweise erhöht.

An den zweiten Kühlerbereich 18b schließt sich beispielhaft der dritte Kühlerbereich 18c an, der beispielsweise einen dynamischen Rost, wie vorangehend beschrieben, zum Transport des Heißklinkers 48 in Förderrichtung F aufweist. Dem dritten Kühlerbereich 18c wird vorzugsweise in drittes Kühlgas 52 zugeführt und nach dem Kühlen des Heißklinkers 48 in dem dritten Kühlerbereich 18c aus diesem als Kühlerabluft 52 aus dem Kühler 18 abgeführt. Bei dem dritten Kühlgas 52 handelt es sich beispielsweise um Luft.

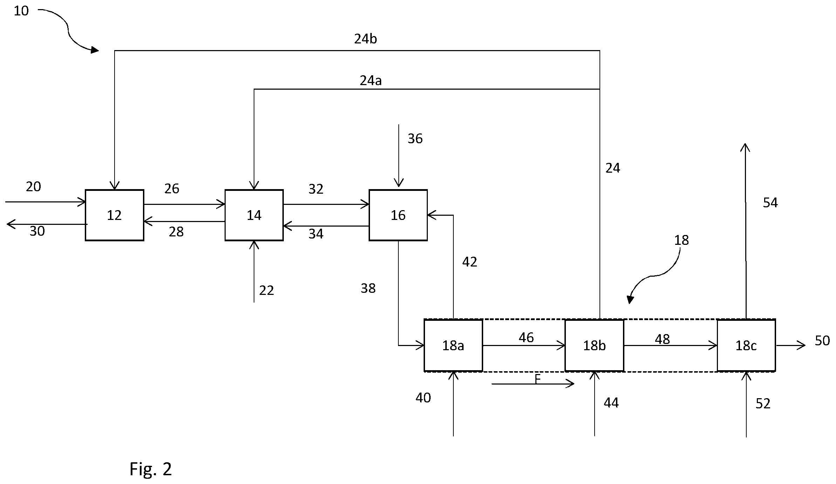

Fig. 2 zeigt eine Zementherstellungsanlage 10, die im Wesentlichen der in Fig. 1 dargestellten Zementherstellungsanlage 10 entspricht. Gleiche Elemente sind mit gleichen Bezugszeichen versehen. Im Unterschied zur Fig. 1 wird in der Zementherstellungsanlage der Fig. 2 das Abgas 24 des zweiten Kühlerbereichs in zwei Teilgasströme separiert, wobei ein erster Teilgasstrom 24a als Traggas zum Kalzinator 14 geleitet und ein zweiter Teilgasstrom 24b zum Vorwärmer 12 geleitet wird. Vorzugsweise ist die Menge der Teilgasströme bezogen auf das Abgas 24 eistellbar. Dadurch ist die Gasmenge zu dem Kalzinator 14 und den Vorwärmer 12 einstellbar, sodass ein optimaler Brennstoffverbrauch in dem Kalzinator 14 erreichbar ist.

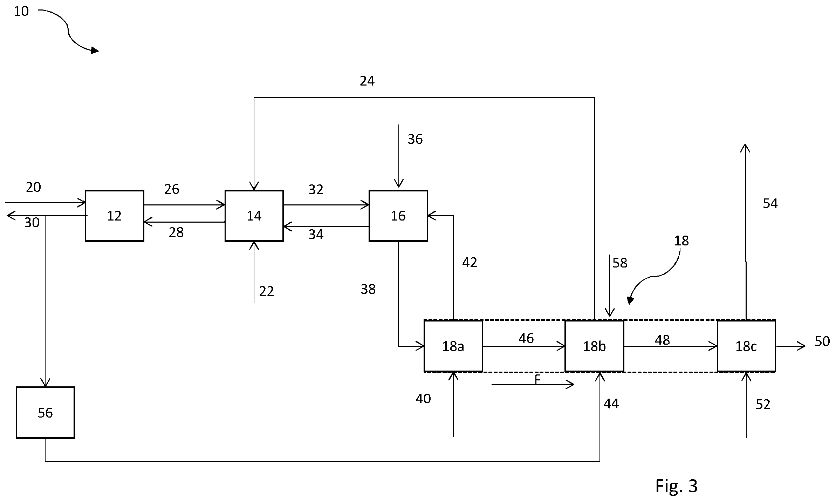

Fig. 3 zeigt eine Zementherstellungsanlage 10, die im Wesentlichen der in Fig. 1 dargestellten Zementherstellungsanlage 10 entspricht. Gleiche Elemente sind mit gleichen Bezugszeichen versehen. Im Unterschied zur Fig. 1 weist die Zementherstellungsanlage 10 eine Konditionierungseinrichtung 56 auf, wobei das Vorwärmerabgas 30 zumindest teilweise der Konditionierungseinrichtung 56 zugeführt wird. Bei der Konditionierungseinrichtung 56 handelt es sich beispielsweise um einen Filter, Wärmetauscher, Gasmischer, Kondensator oder Spühturm. Die Konditionierungseinrichtung 56 ist vorzugsweise derart ausgebildet, dass sie das Vorwärmerabgas behandelt, insbesondere kühlt, Staub oder gröbere Partikel aus dem Vorwärmegas filtert und/ oder den Wassergehalt des Vorwärmerabgases erhöht oder verringert. Die Konditionierungseinrichtung 56 ist vorzugsweise derart ausgebildet, dass sie das Vorwärmerabgas behandelt, sodass es beim Verlassen der Konditionierungseinrichtung 56 einen Sauerstoffanteil von maximal 15 Vol.-%, insbesondere maximal 10 Vol.-%, vorzugsweise maximal 5 Vol.-% aufweist und vorzugsweise eine Mischung aus CO₂ und Wasser umfasst insbesondere mit einem CO₂-Anteil von vorzugsweise mindestens 75 Vol.-%. Das in der Konditionierungseinrichtung 56 behandelte Vorwärmerabgas bildet vorzugsweise vollständig oder teilweise das zweite Kühlgas 44 und wird in den zweiten Kühlerbereich 18b eingeleitet.

Im Unterschied zu der Zementherstellungsanlage der Fig. 1 weist die Zementherstellungsanlage 10 der Fig. 3 eine Befeuchtungseinrichtung 58 auf, die zur Einleitung, insbesondere Eindüsung, von Wasser in den zweiten Kühlerbereich 18b ausgebildet und angeordnet ist. Vorzugsweise wird in dem zweiten Kühlerbereich 18b ein Wassergehalt von mehr als 10 Vol.-%, insbesondere mehr als 20 Vol.-%, vorzugsweise mehr als 30 Vol.-%, mittels der Befeuchtungseinrichtung 58 eingestellt. Dadurch wird in dem Kalzinator 14 ebenfalls eine entsprechende Feuchte eingestellt. Das Kalzinatorabgas 28 und das Vorwärmerabgas 30 weisen vorzugsweise eine entsprechende Feuchte auf. Dies bewirkt, vorzugsweise nach der Kondensation der im Abgas enthaltenen Feuchte, beispielsweise in einen Kondensator oder Gaswäscher, einen erhöhten Partialdruck des CO₂ in dem Abgas, insbesondere dem Vorwärmerabgas 30, wodurch eine anschließende Abscheidung von CO₂ mit einem geringeren elektrischen Energieaufwand ermöglicht wird.

Vorzugsweise wird die Temperatur und/ oder der Volumenstrom des Abgases 24 des zweiten Kühlerbereichs 18b mittels einer Messeinrichtung ermittelt und die Menge an über die Befeuchtungseinrichtung 58 in den zweiten Kühlerbereich 18b eingeleitetem Wasser wird in Abhängigkeit der ermittelten Temperatur und/ oder Volumenstrom geregelt, insbesondere erhöht oder verringert. Insbesondere wird der Volumenstrom des Abgases 24 konstant gehalten. Der ermittelte Volumenstrom und/ oder die ermittelte Temperatur werden vorzugsweise mit einem jeweiligen vorab bestimmten Grenzwert verglichen und bei einer Abweichung von diesem Grenzwert wird die Menge an Wasser in den zweiten Kühlerbereich 18b erhöht oder verringert. Bei einer Überschreitung des Grenzwertes des Volumenstroms und/ oder der Temperatur, wird die Menge an Wasser in den zweiten Kühlerbereich 18b vorzugsweise erhöht.

Vorzugsweise wird ein Teilstrom des Vorwärmerabgases 30 der Konditionierungseinrichtung 56 zugeführt, wobei der übrige Teilstrom des Vorwärmerabgases 30 abgeführt wird. Es ist ebenfalls denkbar, dass das Vorwärmerabgas 30 vollständig der Konditionierungseinrichtung 56 zugeführt wird und im Anschluss an die Konditionierungseinrichtung 56 leidglich ein Teilstrom das zweite Kühlgas 44 ausbildet und der übrige Teilstrom aus der Zementherstellungsanlage 10 abgeführt wird.

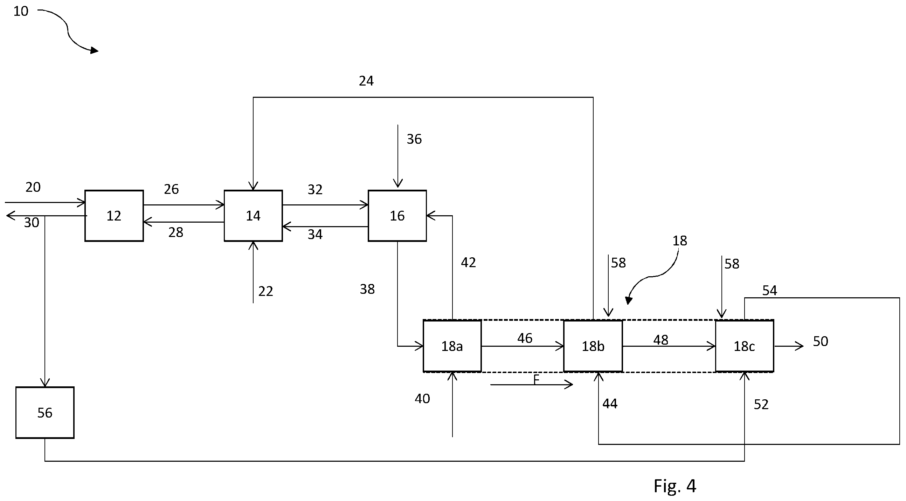

Fig. 4 zeigt eine Zementherstellungsanlage 10, die im Wesentlichen der in Fig. 3 dargestellten Zementherstellungsanlage 10 entspricht. Gleiche Elemente sind mit gleichen Bezugszeichen versehen. Im Unterschied zur Fig. 3 wird in dem Ausführungsbeispiel der Fig. 4 das mittels der Konditionierungseinrichtung 56 behandelte Vorwärmerabgas 30 dem dritten Kühlerbereich 18c zugeführt und bildet teilweise oder vollständig das dritte Kühlgas 52. Das Abgas 54 des dritten Kühlerbereichs 18c wird vorzugsweise vollständig oder teilweise dem zweiten Kühlerbereich 18b zugeführt und bildet das zweite Kühlgas 44. Der dritte Kühlerbereich 18c weist beispielhaft eine weitere Befeuchtungseinrichtung 58, die zur Einleitung von Wasser in den dritten Kühlerbereich 18c ausgebildet ist.

Vorzugsweise ist zwischen dem zweiten Kühlerbereich 18b und dem dritten Kühlerbereich 18c eine weitere in Fig. 4 nicht dargestellte Konditionierungseinrichtung angeordnet und derart ausgebildet, dass sie das Abgas des dritten Kühlerbereichs 18c derart behandelt, dass es beim Verlassen der Konditionierungseinrichtung 56 einen Sauerstoffanteil von maximal 15 Vol.-%, insbesondere maximal 10 Vol.-%, vorzugsweise maximal 5 Vol.-% aufweist und vorzugsweise eine Mischung aus CO₂ und Wasser umfasst insbesondere mit einem CO₂-Anteil von vorzugsweise mindestens 75 Vol.-%. Das in der weiteren Konditionierungseinrichtung behandelte Vorwärmerabgas bildet vorzugsweise vollständig oder teilweise das zweite Kühlgas 44 und wird in den zweiten Kühlerbereich 18b eingeleitet. Dies ermöglicht eine Verringerung der Abgasmenge des Kühlers 18.

Ein weiteres Ausführungsbeispiel unterscheidet sich von dem in Fig. 3 gezeigten Ausführungsbeispiel durch einen zusätzlichen Entfeuchter 60, der den Vorwärmerabgas 30 entfeuchtet, beispielsweise vor einer Kohlendioxidabtrennung. Über den Fluidstrom 62 wird das im Entfeuchter 60 abgetrennte Wasser dem zweiten Kühlerbereich 18b zugeführt und dort insbesondere eingesprüht.

### Bezugszeichenliste

- 10: Zementherstellungsanlag
- 12: Vorwärmer
- 14: Kalzinator
- 16: Ofen
- 18: Kühler
- 18a: erster Kühlerbereich
- 18b: zweiter Kühlerbereich
- 18c: dritter Kühlerbereich
- 20: Rohmaterial
- 22: Brennstoff
- 24: Abgas des zweiten Kühlerbereichs / Traggas zum Kalzinator
- 26: Heißmehl / erwärmtes Rohmaterial
- 28: Kalzinatorabgas
- 30: Vorwärmerabgas
- 32: kalziniertes Rohmaterial
- 34: Ofenabgas
- 36: Brennstoff
- 38: heißer Zementklinker
- 40: erstes Kühlgas
- 42: Abgas des ersten Kühlerbereichs / Verbrennungsgas zum Ofen
- 44: zweites Kühlgas
- 46: Heißklinker
- 48: Heißklinker
- 50: Kaltklinker
- 52: drittes Kühlgas
- 54: Kühlerabluft
- 56: Konditionierungseinrichtung
- 58: Befeuchtungseinrichtung
- 60: Entfeuchter
- 62: Fluidstrom
- F: Förderrichtung des Klinkers innerhalb des Kühlers 18

## Patentansprüche

1. Verfahren zum Herstellen von Zementklinker (50) aufweisend die Schritte:
Vorwärmen von Rohmaterial (20) in einem Vorwärmer (12),
Kalzinieren des vorgewärmten Rohmaterials (26) in einem Kalzinator (14),
Brennen des vorgewärmten und kalzinierten Rohmehls (32) in einem Ofen (16) zu Zementklinker (38), wobei dem Ofen (16) ein Verbrennungsgas (42) mit einem Sauerstoffanteil von mehr als 50 Vol.-%, insbesondere mehr als 80 Vol.-%, vorzugsweise mehr als 90 Vol.-% zugeführt wird, und
Kühlen des Zementklinkers (38) in einem Kühler (18), wobei der Kühler (18) in Förderrichtung des Zementklinkers (38) einen ersten Kühlerbereich (18a) und einen zweiten Kühlerbereich (18b) aufweist und wobei die Abluft des ersten Kühlerbereichs (18a) das Verbrennungsgas (42) bildet,
**dadurch gekennzeichnet, dass**
das Abgas (24) des zweiten Kühlerbereichs (18b) dem Kalzinator (14) zugeführt wird und einen Sauerstoffanteil von maximal 15 Vol.-%, insbesondere maximal 10 Vol.-%, vorzugsweise maximal 5 Vol.-% aufweist,
wobei das dem zweiten Kühlerbereich (18b) zugeführte Fluid einen Inertanteil von wenigstens 60 Vol.-%, insbesondere von wenigstens 80 Vol.-%, vorzugsweise von wenigstens 90 Vol.-%, aufweist, wobei der Inertanteil des Fluids aus Wasser, Kohlendioxid oder Wasser und Kohlendioxid besteht.

2. Verfahren nach Anspruch 1, **dadurch gekennzeichnet, dass** dem ersten und dem zweiten Kühlerbereich (18a,b) jeweils separat ein Kühlgas (40, 44) zugeführt wird und wobei das dem zweiten Kühlerbereich (18b) zugeführte Kühlgas (44) einen Sauerstoffanteil von maximal 15 Vol.-%, insbesondere 10 Vol.-%, vorzugsweise 5 Vol.-% aufweist.

3. Verfahren nach einem der vorangehenden Ansprüche, **dadurch gekennzeichnet, dass** die Sauerstoffkonzentration des Gases (28) stromabwärts des Kalzinators (14) ermittelt wird und die Sauerstoffkonzentration des dem Kalzinator (14) zugeführten Abgases (24) des zweiten Kühlerbereichs (18b) in Abhängigkeit der ermittelten Sauerstoffkonzentration geregelt wird.

4. Verfahren nach einem der vorangehenden Ansprüche, **dadurch gekennzeichnet, dass** zumindest ein Teil des Abgases (24) des zweiten Kühlerbereichs (18b) dem Vorwärmer (12) zugeführt wird.

5. Verfahren nach einem der vorangehenden Ansprüche, **dadurch gekennzeichnet, dass** das Vorwärmerabgas (30) einer Konditionierungseinrichtung (56) zur Behandlung, insbesondere thermischen Behandlung, Befeuchtung und/ oder Reinigung, zugeführt wird.

6. Verfahren nach Anspruch 5, **dadurch gekennzeichnet, dass** das Gas im Anschluss an die Konditionierungseinrichtung (56) dem zweiten Kühlerbereich (18b) zugeführt wird.

7. Verfahren nach Anspruch 5 oder 6, **dadurch gekennzeichnet, dass** der Kühler (18) einen dritten Kühlerbereich (18c) aufweist, der sich an den zweiten Kühlbereich (18b) anschließt und wobei das Gas im Anschluss an die Konditionierungseinrichtung (56) dem dritten Kühlerbereich (18c) zugeführt wird.

8. Verfahren nach Anspruch 7, **dadurch gekennzeichnet, dass** das Abgas (54) des dritten Kühlerbereichs (18c) dem zweiten Kühlerbereich (18b) zugeführt wird.

9. Verfahren nach einem der vorangehenden Ansprüche, **dadurch gekennzeichnet, dass** dem zweiten Kühlerbreich (18b) Wasser zugeführt wird.

10. Verfahren nach einem der vorangehenden Ansprüche, **dadurch gekennzeichnet, dass** das dem zweiten Kühlerbereich (18b) zugeführte Kühlgas (44) einen Wassergehalt von mehr als 10 Vol.-%, insbesondere mehr als 20 Vol.-%, vorzugsweise mehr als 30 Vol.-%, aufweist.

## Claims

1. A method of producing cement clinker (50) comprising the steps of:
Preheating of raw material (20) in a preheater (12),
Calcining the preheated raw material (26) in a calciner (14),
burning the preheated and calcined raw meal (32) in a kiln (16) to form cement clinker (38), wherein a combustion gas (42) with an oxygen content of more than 50% by volume, in particular more than 80% by volume, preferably more than 90% by volume, is fed to the kiln (16), and
cooling the cement clinker (38) in a cooler (18), the cooler (18) having a first cooler region (18a) and a second cooler region (18b) in the conveying direction of the cement clinker (38), and the exhaust air from the first cooler region (18a) forming the combustion gas (42),
**characterized in that**
the exhaust gas (24) of the second cooler section (18b) is fed to the calciner (14) and has an oxygen content of at most 15% by volume, in particular at most 10% by volume, preferably at most 5% by volume,
wherein the fluid supplied to the second cooler section (18b) has an inert fraction of at least 60% by volume, in particular of at least 80% by volume, preferably of at least 90% by volume, the inert fraction of the fluid consisting of water, carbon dioxide or water and carbon dioxide.

2. The method according to claim 1, **characterized in that** a cooling gas (40, 44) is supplied separately to each of the first and second cooler regions (18a,b), and wherein the cooling gas (44) supplied to the second cooler region (18b) has an oxygen content of at most 15% by volume, in particular 10% by volume, preferably 5% by volume.

3. A method according to any one of the preceding claims, **characterized in that** the oxygen concentration of the gas (28) downstream of the calciner (14) is determined and the oxygen concentration of the exhaust gas (24) of the second cooler section (18b) supplied to the calciner (14) is controlled as a function of the determined oxygen concentration.

4. Method according to one of the preceding claims, **characterized in that** at least part of the exhaust gas (24) of the second cooler section (18b) is supplied to the preheater (12).

5. Method according to one of the preceding claims, **characterized in that** the preheater exhaust gas (30) is fed to a conditioning device (56) for treatment, in particular thermal treatment, humidification and/or purification.

6. The method of claim 5, **characterized in that** the gas is supplied to the second cooler section (18b) downstream of the conditioning means (56).

7. The method of claim 5 or 6, **characterized in that** the cooler (18) comprises a third cooler section (18c) which is contiguous to the second cooler section (18b) and wherein the gas is supplied to the third cooler section (18c) downstream of the conditioning means (56).

8. The method according to claim 7, **characterized in that** the exhaust gas (54) of the third cooler section (18c) is supplied to the second cooler section (18b).

9. A method according to any one of the preceding claims, **characterized in that** water is supplied to the second cooler region (18b).

10. The method according to any one of the preceding claims, **characterized in that** the cooling gas (44) supplied to the second cooler region (18b) has a water content of more than 10% by volume, in particular more than 20% by volume, preferably more than 30% by volume.

## Revendications

1. Procédé de fabrication de clinker de ciment (50), comprenant les étapes consistant à :
préchauffage de la matière première (20) dans un préchauffeur (12),
la calcination de la matière première préchauffée (26) dans un calcinateur (14),
la cuisson de la farine crue (32) préchauffée et calcinée dans un four (16) en clinker de ciment (38), un gaz de combustion (42) avec une proportion d'oxygène supérieure à 50 % en volume, en particulier supérieure à 80 % en volume, de préférence supérieure à 90 % en volume, étant amené au four (16), et
refroidissement du clinker de ciment (38) dans un refroidisseur (18), le refroidisseur (18) présentant, dans la direction de transport du clinker de ciment (38), une première zone de refroidissement (18a) et une deuxième zone de refroidissement (18b), et l'air d'évacuation de la première zone de refroidissement (18a) formant le gaz de combustion (42),
**caractérisé en ce que**
le gaz d'échappement (24) de la deuxième zone de refroidissement (18b) est amené au calcinateur (14) et présente une teneur en oxygène de 15 % en volume maximum, en particulier de 10 % en volume maximum, de préférence de 5 % en volume maximum,
dans lequel le fluide amené à la deuxième zone de refroidissement (18b) présente une part inerte d'au moins 60 % en volume, en particulier d'au moins 80 % en volume, de préférence d'au moins 90 % en volume, la part inerte du fluide étant constituée d'eau, de dioxyde de carbone ou d'eau et de dioxyde de carbone.

2. Procédé selon la revendication 1, **caractérisé en ce qu'**un gaz de refroidissement (40, 44) est amené séparément à la première et à la deuxième zone de refroidissement (18a, b), et dans lequel le gaz de refroidissement (44) amené à la deuxième zone de refroidissement (18b) présente une teneur en oxygène de 15 % en volume au maximum, en particulier de 10 % en volume, de préférence de 5 % en volume.

3. Procédé selon l'une des revendications précédentes, **caractérisé en ce qu'**on détermine la concentration en oxygène du gaz (28) en aval du calcinateur (14) et on régule la concentration en oxygène du gaz d'échappement (24) de la deuxième zone de refroidissement (18b) alimentant le calcinateur (14) en fonction de la concentration en oxygène déterminée.

4. Procédé selon l'une des revendications précédentes, caractérisé en **ce qu**'au moins une partie des gaz d'échappement (24) de la deuxième zone de refroidissement (18b) est amenée au préchauffeur (12).

5. Procédé selon l'une des revendications précédentes, **caractérisé en ce que** le gaz d'échappement du préchauffeur (30) est amené à un dispositif de conditionnement (56) pour le traitement, en particulier le traitement thermique, l'humidification et/ou l'épuration.

6. Procédé selon la revendication 5, **caractérisé en ce que** le gaz est amené à la deuxième zone de refroidissement (18b) après le dispositif de conditionnement (56).

7. Procédé selon la revendication 5 ou 6, **caractérisé en ce que** le refroidisseur (18) présente une troisième zone de refroidissement (18c) qui se raccorde à la deuxième zone de refroidissement (18b) et dans lequel le gaz est amené à la troisième zone de refroidissement (18c) à la suite du dispositif de conditionnement (56).

8. Procédé selon la revendication 7, **caractérisé en ce que** le gaz d'échappement (54) de la troisième zone de refroidissement (18c) est amené à la deuxième zone de refroidissement (18b).

9. Procédé selon l'une des revendications précédentes, **caractérisé en ce que** de l'eau est amenée dans le deuxième compartiment de refroidissement (18b).

10. Procédé selon l'une des revendications précédentes, **caractérisé en ce que** le gaz de refroidissement (44) amené à la deuxième zone de refroidissement (18b) présente une teneur en eau supérieure à 10 % en volume, notamment supérieure à 20 % en volume, de préférence supérieure à 30 % en volume.
